# EUROPEAN PATENT APPLICATION

(11) **EP 1 413 206 A2**
(43) Date of publication of application: **28.04.2004**
(21) Application number: 03256613.5
(22) Date of filing: 21.10.2003
(51) Int. Cl.: A23G 3/00

(54) **An edible transfer tattoo and method of manufacture therefor**

(30) Priority: 21.10.2002 GB 0224475; 27.11.2002 GB 0227661; 10.04.2003 GB 0308298
(71) Applicant: Culpitt Limited, Ashington, Northumberland NE63 8UQ (GB)
(72) Inventor: Woodhouse, James Frederick, Killingworth, Tyne & Wear NE12 6FZ (GB); Williams, Ellis, Sunderland Tyne & Wear SR4 9QH (GB); Russell, John, Bedlington Northumberland NE22 6DX (GB); Candler, Andrew Maxwell, Morpeth Northumberland NE61 7DF (GB); Keohane, Fergal, Bedlington Northumberland NE22 7EP (GB)
(74) Representative: Grant, John

(57) **Abstract**

The edible transfer tattoo of the invention comprises a starch based substrate having a design printed thereon using edible inks. In the method of manufacture a plurality of tattoo designs are applied to a sheet of the starch based substrate by an off-set printing process or by a silk screen process. Thereafter, the sheet is subjected to cutting and snagging operation to facilitate the ready removal of the edible transfers from the sheet. In one composition provided by the invention, the starch based substrate is comprised of gum acacia, maize starch, micro-crystalline cellulose, xanthan gum, titanium dioxide, modified starch, potassium sorbate, water, sorbitol, glycerine polysorbate 60, vanilla flavouring, lecithin and rape-seed oil. The tattoos may be used for personal use, especially by children, for application to the skin without any deleterious side affects. Further use of the edible tattoos includes their application to comestible products such as iced biscuits.

## Description

This invention is concerned with an edible transfer tattoo and a method of manufacture thereof.

Transfer tattoos have been available for many years and usually comprise an image formed on a carrier, which image may be transferred from the carrier to a receptor surface depending upon the nature of the transfer tattoo and the end use.

For example, it is well known that transfer tattoos may be formed as an image on a paper-like carrier.

These are normally used by children as a plaything insofar that, the image may be transferred to the skin, usually an arm or the back of a hand, merely by wetting the skin and placing the transfer overlying the wetted area.

The transfer is gently rubbed and, after a while sufficient to allow the design to transfer onto the skin, the paper carrier is peeled off to reveal the tattoo. The paper carrier is then discarded.

Of late, transfer tattoos have become more of a fashion item with all ages, both male and female.

This has lead to the extensive use of fashion transfers by children with the obvious side effect that children will use a tattoo and then, without thinking, deposit the carrier anywhere after a tattoo has been applied to the skin.

Further usage of the transfer tattoos includes their application to comestible products, e.g. iced biscuits or like products.

Once again the user of these transfer tattoos, especially when they are youngsters, will discard the carrier anywhere about a kitchen, thereby creating a litter problem or making a mess for an overworked parent to clean up.

It is therefore one of the objects of the present invention to overcome or at least mitigate the disadvantages of prior art transfer tattoos.

Thus, the present invention conveniently provides an edible transfer tattoo comprising a starch based substrate having an image printed thereon for application to a person or a comestible product, characterised in that the starch based substrate preferably comprises, as a percentage by weight of the mixture from which the substrate is made:
i) up to 2.5% by wt. xanthan gum:
ii) 5% to 15% by wt. rapeseed oil;
iii) up to 6% by wt. modified starch; and,
iv) up to 3.5% by wt. lecithin.

Conveniently, the starch based substrate of the last three preceding paragraphs may also comprise, as a percentage by weight of the mixture from which the substrate is made:
i) 10% to 20% by wt. maize starch;
ii) up to 11 % by wt. microcrystalline cellulose;
iii) 1% to 17% by wt. gum acacia;
iv) up to 4% by wt. titanium dioxide;
v) up to 0.4% by wt. potassium phosphate;
vi) 28% to 52% by wt. water;
vii) up to 10% by wt glycerine;
viii) up to 4.5% by wt. polysorbate 60;
ix) up to 15% by wt. sorbitol; and,
x) up to 0.2% by wt. vanilla flavouring.

In one specific formulation provided by the present invention, the starch based substrate may comprise, as a percentage by weight of the mixture from which the substrate is made: 14.038% by wt. gum acacia, 13.343% by wt. maize starch, 1.946% by wt. microcrystalline cellulose, 0.695% by wt. xanthan, 2.896% by wt. titaniun dioxide, 0.486% modified starch, 0.139% by wt. potassium sorbate, 41.696% by wt. water, 9.266% by wt. sorbitol, 4.633% by wt, glycerine, 0.973% by wt. polysorbate 60, 0.116% by wt. vanilla flavouring, 0.510% by wt. lecithin and 9.266% by wt. rapeseed oil.

The starch based substrate may also comprise, as a percentage by wt. of the mixture from which the substrate is made:
i) up to 10% by wt. sugar;
ii) up to 6% by wt. dextrose monohydrate;
iii) up to 0.6% by wt. citric acid; and,
iv) 5% to 15% by wt. glucose syrup.

In a further specific formulation provided by the invention, the starch based substrate may comprise, as a percentage by weight of the mixture from which the substrate is made: 14.484% by wt. maize starch, 6.337% by wt. microcrystalline cellulose, 6.236% by wt. gum acacia, 5.029% by wt. icing sugar, 4.225% by wt. dextrose monohydrate, 3.152% by wt. titanium dioxide, 0.503% by wt. modified starch, 0.302% by wt. citric acid, 0.084% by wt. potassium sorbate, 0.302% by wt. xanthan, 40.325% by wt. water, 9.355% by wt. glucose liquid, 3.722% by wt. glycerine, 1.106% by wt. polysorbate 60, 0.402% by wt. sorbitol, 0.101% vanilla flavouring, 4.023% by wt. rapeseed oil and 0.402% by wt. lecithin.

The present invention also provides a method of manufacture for an edible transfer tattoo for application to a person or comestible product, the method comprising the steps of forming a starch based substrate by:
i) blending a dry mixture of ingredients comprising, as a percentage by weight of the mixture from which the substrate is made:
   a) 10% to 20% by wt. maize starch;
   b) up to 11 % by wt. microcrystalline cellulose;
   c) 1% to 17% by wt. gum acacia;
   d) up to 6% by wt. modified starch;
   e) up to 2.5% by wt. xanthan; and,
   f) up to 0.4% by wt. potassium sorbate;
ii) blending a liquid mixture of ingredients comprising, as a percentage by weight of the mixture from which the substrate is made:
   a) 28% to 52% by wt. water;
   b) up to 10% by wt. glycerine;
   c) up to 4.5% by wt polysorbate 60;
   d) up to 15% by wt. sorbitol;
   e) up to 0.2% by wt. vanilla flavouring; and,
   f) up to 4% by wt. titanium dioxide;
iii) heating a fatty phase mixture of ingredients comprising, as a percentage by weight of the mixture from which the substrate is made:
   a) up to 15% by wt. rapeseed oil; and,
   b) up to 3.5% by wt. lecithin;
iv) dispersing the heated mixture of rapeseed oil and lecithin in the premixed liquid ingredients using a high shear mixer to form an admixture thereof;
v) blending the premixed dry ingredients with the admixed liquid and fatty phase ingredients;
vi) forming a sheet of substrate material;
vii) printing images on the sheet of substrate material; and,
viii) cutting and snagging the sheet of substrate material to facilitate the ready separation of an edible transfer tattoo from the sheet of substrate material.

In a preferred method of manufacture for an edible transfer tattoo the dry ingredients of the starch based substrate further comprise, as a percentage by weight of the mixture from which the substrate is made:
i) up to 10% by wt. sugar;
ii) up to 6% by wt. dextrose monohydrate; and,
iii) up to 0.6% by wt. citric acid.

In a further preferred method of manufacture for a starch based substrate the liquid ingredients further comprise 5% to 15% by wt. glucose syrup.

In the method of manufacture of the edible transfer tattoo provided by the present invention, the images are conveniently applied to the substrate material by a silk screen process or by an offset printing process using edible inks.
Conveniently, the blending of the ingredients at each stage of the method is effected in a high shear mixer.

The starch base substrate material formed by the above method may conveniently have a thickness of 5 to 25 microns.

The present invention also provides a comestible product having an image applied thereto from an edible transfer tattoo made according to the present invention.

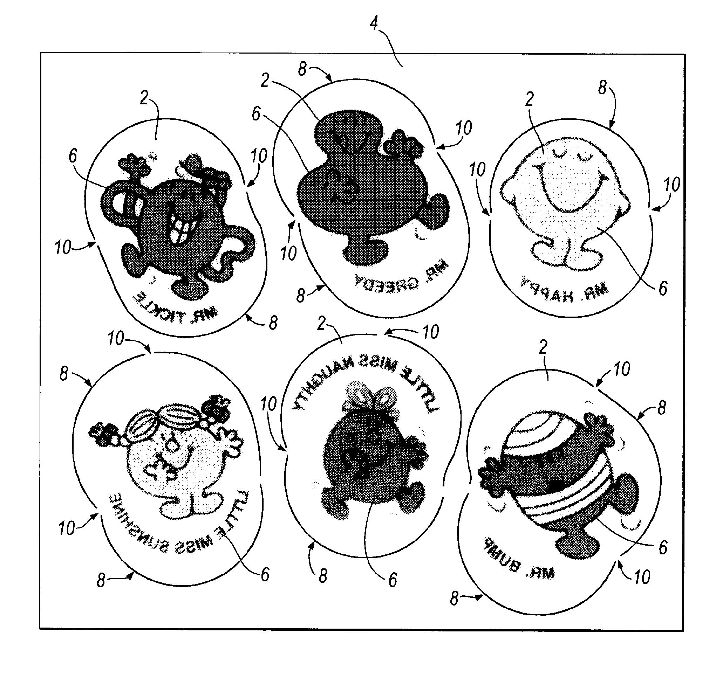

There now follows, by way of example of the invention, a detailed description of an edible transfer tattoo and a method of manufacture therefor, which description is to be read with reference to the accompanying drawing.

An edible transfer tattoo 2 provided by the present invention is formed as a plurality of such tattoos on a coupon 4 cut from a sheet, not shown, of starch based substrate material as described herein.

The sheet is made from an edible composition comprising a potato starch base, which sheet is formed by any suitable process and has a thickness of 5 to 25 microns.

In a first general formulation, provided by the present invention, the starch based substrate comprises, as a percentage by weight of the mixture from which the substrate is made:
a) dry ingredients including: 7% to 17% by wt. gum acacia, 10% to 20% by wt. maize starch, up to 4% by wt. titanium dioxide, up to 6.5% microcrystalline cellulose, up to 2.5% by wt. xanthan, up to 2.7% by wt. modified starch and up to 0.4% potassium sorbate; and,
b) liquid ingredients including: 32% to 52% by wt. water, 5% to 15% by wt. sorbitol, up to 10% by wt. glycerine, up to 3.5% by wt. polysorbate 60 and up to 0.2% by wt. vanilla flavouring; and,
c) fatty phase ingredients including: 5% to 15% by wt. rapeseed oil and up to 3.5% lecithin.

In a second general formulation, provided by the invention, the starch based substrate comprises, as a percentage by weight of the mixture from which the substrate is made:
a) dry ingredients including: 10% to 20% by wt. maize starch, 1% to 11 % by wt. microcrystalline cellulose, 1% to 11% by wt. gum acacia, up to 10% by wt. icing cane sugar, up to 6% by wt. dextrose monohydrate, up to 4% by wt. titanium dioxide, up to 6% by wt. modified starch, up to 0.6% by wt citric acid, up to 1% by wt. xanthan and up to 0.3% by wt. potassium sorbate; and,
b) liquid ingredients including: 28% to 48% by wt water, 5% to 15% by wt. glucose syrup, 1% to 7% by wt. glycerine, up to 4.5% polysorbate 60, up to 4% by wt. sorbitol and up to 0.2% by wt. vanilla flavouring; and,
c) fatty phase ingredients including: up to 10% rapeseed oil and up to 1% by wt lecithin.

The following are specific examples of formulations for the starch based substrate.

### EXAMPLE 1

| Dry ingredients | % by wt. | Wt. in Kg |
|---|---|---|
| Gum acacia | 14.038 | 6.060 |
| Maize starch | 13.343 | 5.760 |
| Microcrystalline cellulose | 1.946 | 0.840 |
| Xanthan | 0. 695 | 0.300 |
| Titanium dioxide | 2.896 | 1.250 |
| Modified starch | 0.486 | 0.210 |
| Potassium sorbate | 0.139 | 0.060 |
| | | |

| Liquid ingredients | | |
|---|---|---|
| Water | 41.696 | 18.000 |
| Sorbitol | 9.266 | 4.000 |
| Glycerine | 4.633 | 2.000 |
| Polysorbate 60 | 0.973 | 0.420 |
| Vanilla flavouring | 0.116 | 0.050 |
| | | |

| Fatty phase | | |
|---|---|---|
| Lecithin | 0.510 | 0.220 |
| Rapeseed oil | 9.266 | 4.000 |
| | | |
| Total | 100.00 | 43.170 |

### EXAMPLE 2

| Dry Ingredients | % By Wt. | Wt. in Kg |
|---|---|---|
| Maize starch | 14.484 | 6.912 |
| Microcrystalline cellulose | 6.337 | 3.024 |
| Gum acacia | 6.236 | 2.976 |
| Icing cane sugar | 5.029 | 2.400 |
| Dextrose monohydrate | 4.225 | 2.061 |
| Titanium dioxide | 3.152 | 1.504 |
| Modified starch | 0.503 | 0.240 |
| Citric acid | 0.302 | 0.144 |
| Potassium sorbate | 0.084 | 0.040 |
| Xanthan | 0.302 | 0.144 |
| | | |

| Liquid Ingredients | | |
|---|---|---|
| Water | 40.235 | 19.200 |
| Glucose liquid | 9.355 | 4.464 |
| Glycerine | 3.722 | 1.776 |
| Polysorbate 60 | 1.106 | 0.528 |
| Sorbitol | 0.402 | 0.192 |
| Vanilla flavouring | 0.101 | 0.048 |
| | | |

| Fatty phase | | |
|---|---|---|
| Rapeseed oil | 4.023 | 1.920 |
| Lecithin | 0.402 | 0.192 |
| | | |
| Total | 100.00 | 47.720 |

The method of making the starch based substrate is as follows:
1. all of the dry ingredients with the exception of the titanium dioxide are dry blended together in a mixer;
2. all of the liquid ingredients and the polysorbate 60 are blended together, the titanium dioxide being added to the blended mixture and dispersed therein using a high shear mixer for approximately 5 minutes;
3. the fatty phase lecithin and the rapeseed oil are heated to between 70 and 80 degrees Centigrade and added to the blended liquid phase and dispersed therein using a high shear mixer; and,
4. the blended liquid phase is then added to the blended dry ingredients in the mixer and mixed for 5 minutes or until properly mixed.

The mixture is then formed into a sheet of substrate material of 5 to 25 microns thickness by any suitable process, e.g. by spraying or rolling.

Images 6 are then applied to the sheet of starch based material by a silk screen printing process; alternatively images 6 may be applied to the sheet of starch based material by an offset printing process.

The images 6 are formed using edible inks approved for use with comestible products.

Thereafter, the sheet of starch based substrate material is subjected to the cutting action of a cutting die in a flat bed cutting press, not shown; alternatively, the sheet can be cut using a rotary cutting method.

During the cutting operation, irrespective of what cutting method is used, each of the images 6 on the sheet of starch based substrate material is partially sheared along shear lines 8. At the same time the sheet is cut up into coupons 4,there being six tattoo images on each coupon 4 as shown in the accompanying drawing.

However, during the cutting operation, at least two small areas 10 are left uncut so that the images 6 are retained in the plane of the coupons 4 for packaging and transport to the end user.

During the cutting operation the coupons 4 are delineated to be of a size suitable for packaging and sale. The accompanying drawing shows a typical format for the end product in which there are six designs delineated by the shear lines 8, however, smaller or larger coupons may be cut from the sheet as required.

When used, an edible transfer tattoo, is removed from the coupon 4 by breaking the uncut areas 10 of the coupon 4.

The user then wets the skin where a tattoo is to be applied and places an edible transfer tattoo overlying the wetted area and gently rubs the reverse side of the transfer tattoo before removal thereof to reveal the tattoo applied to the skin.

The edible substrate may be eaten after application of the tattoo; indeed, the edible transfer tattoo may be eaten together with the edible ink image.

The edible transfer tattoos may also be used for decorating comestible products, e.g. iced biscuits.

## Claims

1. An edible transfer tattoo comprising a starch based substrate having an image printed thereon for application to a person or a comestible product, **characterised in that** the substrate comprises as a percentage by weight of the mixture from which the substrate is made:
i) up to 2.5% by wt. xanthan gum;
ii) 5% to 15% by wt. rapeseed oil;
iii) up to 6% by wt. modified starch; and,
iv) up to 3.5% by wt. lecithin.

2. An edible transfer tattoo according to Claim 1, **characterised in that** the starch based substrate also comprises as a percentage by weight of the mixture from which the substrate is made:
i) 10% to 20% by wt. maize starch;
ii) up to 11 % by wt microcrystalline cellulose;
iii) 1% to 17% by wt. gum acacia;
iv) up to 4% by wt. titanium dioxide;
v) up to 0.4% by wt. potassium phosphate;
vi) 28% to 52% by wt. water;
vii) up to 10% by wt. glycerine;
viii) up to 4.5% by wt. polysorbate 60;
ix) up to 15% by wt. sorbitol; and,
x) up to 0.2% by wt. vanilla flavouring.

3. An edible transfer tattoo according to either one of Claims 1 and 2 **characterised in that** the substrate comprises as a percentage by weight of the mixture from which the substrate is made; 14.038% by wt. gum acacia, 13.343% by wt. maize starch, 1.946% by wt. microcrystalline cellulose, 0.695% by wt. xanthan, 2.896% by wt. titanium dioxide, 0.486% by wt. modified starch, 0.139% by wt. potassium sorbate, 41.696% by wt. water, 9.266% by wt. sorbitol, 4.633% by wt. glycerine, 0.973% by wt. polysorbate 60, 0.116% by wt. vanilla flavouring, 0.510% by wt. lecithin and 9.266% by wt. rapeseed oil.

4. An edible transfer tattoo according to Claim 1, **characterised in that** the starch based substrate also comprises as a percentage by weight of the mixture from which the substrate is made:
i) up to 10% by wt. sugar
ii) up to 6% by wt. dextrose monohydrate;
iii) up to 0.6% by wt. citric acid; and,
iv) 5% to 15% by wt. glucose syrup.

5. An edible transfer tattoo according to any one of Claims 1, 2 and 4 **characterised in that** the substrate comprises as a percentage by weight of the mixture from which the substrate is made; 14.484% by wt. maize starch, 6.337% by wt. microcrystalline cellulose, 6.236% by wt. gum acacia, 5.029% by wt. icing sugar cane, 4.225% by wt. dextros monohydrate, 3.152% by wt. titanium dioxide, 0.503% by wt. modified starch, 0.302% by wt. citric acid, 0.084% by wt. potassium sorbate, 0.302% by wt. xanthan, 40.325% by wt. water, 9.355% by wt. glucose liquid, 3.722% by wt. glycerine, 1.106% polysorbate 60, 0.402% by wt. sorbitol, 0.101% by wt. vanilla flavouring, 4.023% by wt. rapeseed oil and 0.402% by wt. lecithin.

6. A method of manufacture for an edible transfer tattoo for application to a person or a comestible product, the method comprising the steps of forming a starch based substrate by:
i) blending a dry mixture of ingredients comprising as a percentage by weight of the mixture from which the substrate is made:
a) 10% to 20% by wt. maize starch;
b) up to 11 % by wt. microcrystalline cellulose;
c) 1% to 17% by wt. gum acacia;
d) up to 6% by wt. modified starch;
e) up to 2.5% by wt. xanthan; and,
f) up to 0.4% by wt. potassium sorbate;
ii) blending a liquid mixture of ingredients comprising as a percentage by weight of the mixture from which the substrate is made:
a) 28% to 52% by wt. water;
b) up to 10% by wt. glycerine;
c) up to 4.5% by wt. polysorbate 60;
d) up to 15% by wt. sorbitol;
e) up to 0.2% by wt vanilla flavouring; and,
f) up to 0.4% by wt. titanium dioxide;
iii) heating a fatty phase mixture of ingredients comprising as a percentage by weight of the mixture from which the substrate is made:
a) up to 15% by wt. rapeseed oil; and,
b) up to 3.5% by wt. lecithin;
iv) dispersing the heated mixture of rape-seed oil and lecithin in the premixed liquid ingredients using a high shear mixer to form an admixture thereof;
v) blending the premixed dry ingredients with the admixed liquid and fatty phase ingredients;
vi) forming a sheet of substrate material;
vii) printing images on the substrate material; and,
viii) cutting and snagging the sheet of substrate material to facilitate the ready separation of an edible transfer tattoo from the sheet of substrate material.

7. A method of manufacture for an edible transfer tattoo according to Claim 6, **characterised in that** the dry ingredients of the starch based substrate further comprise as a percentage by weight of the mixture from which the substrate is made:
i) up to 10% by wt. sugar;
ii) up to 6% by wt. dextrose monohydrate; and,
iii) up to 0.6% citric acid.

8. A method of manufacture for a starch based substrate according to Claim 7, **characterised in that** the liquid ingredients of the substrate further comprise 5% to 15% by wt. glucose syrup.

9. A method of manufacture for an edible transfer tattoo according to any one of Claims 6, 7 and 8, **characterised in that** the images are applied to the substrate material by a silk screen process or by an offset printing process using edible inks.

10. A method of manufacture for an edible transfer tattoo according to any one of Claims 6 to 9, **characterised in that** the blending of the constituents at each stage of the method is effected in a high shear mixer.

11. An edible transfer tattoo according to any one of Claims 1 to 5 **characterised in that** the starch based substrate is formed by the method of Claims 6 to 10, **characterised in that** the substrate and the sheet of substrate material from which it is delineated have a thickness of 100 to 600 microns.

12. An edible transfer tattoo for application to a person or a comestible product comprising a printed starch based substrate according to any one of Claims 1 to 5 and made by the method of Claims 6 to 10, the printed image being transferred from the printed substrate to a person or a comestible product for the adornment thereof.

13. A comestible product having an image applied thereto from a printed starch based substrate according to any one of Claims 1 to 5, the substrate being made by the method of Claims 7 to 10.

14. A method of forming an edible transfer tattoo according to either one of Claims 11 and 12, **characterised in that** the method comprises the steps of:
a) forming a carrier sheet of edible composition;
b) printing a series of designs on the carrier sheet, and;
c) cutting and snagging the sheet about the series of designs to facilitate the ready removal of the edible transfer tattoos from the carrier sheet.

15. A method of forming an edible transfer tattoo according to Claim 14, **characterised in that** the series of designs is printed on the carrier sheet by a silk screen process.

16. A method of forming an edible transfer tattoo according to Claim 14, **characterised in that** the series of designs is printed on the carrier sheet by an offset printing process.
